# FASCICULE DE BREVET EUROPEEN

(11) **EP 1 693 140 B1**
(45) Date de publication et mention de la délivrance du brevet: **09.09.2009**
(21) Numéro de dépôt: 06300067.3
(22) Date de dépôt: 25.01.2006
(51) Int. Cl.: B23K 9/133

(54) **Conteneur à paroi interne oblique pour le conditionnement d'un fil de soudage**
Behälter für Schweißdraht mit innerer abgeschrägter Wand
Container for welding-wire with sloping internal wall.

(30) Priorité: 17.02.2005 FR 0550451
(43) Date de publication de la demande: 23.08.2006
(73) Titulaire: AIR LIQUIDE WELDING FRANCE, 75007 Paris (FR)
(72) Inventeur: Rigot, Stephan, 51000 Chalons-en-Champagne (FR)
(74) Mandataire: Pittis, Olivier

(56) Documents cités:
- EP-A- 0 519 424
- DE-U1- 9 212 690
- GB-A- 662 585
- US-A- 4 869 367
- US-A- 5 845 862
- PATENT ABSTRACTS OF JAPAN vol. 006, no. 036 (M-115), 5 mars 1982 (1982-03-05) & JP 56 151175 A (KOBE STEEL LTD), 24 novembre 1981 (1981-11-24)
- PATENT ABSTRACTS OF JAPAN vol. 007, no. 009 (M-185), 14 janvier 1983 (1983-01-14) & JP 57 166269 A (KOBE SEIKOSHO KK), 13 octobre 1982 (1982-10-13)
- PATENT ABSTRACTS OF JAPAN vol. 006, no. 086 (M-131), 25 mai 1982 (1982-05-25) & JP 57 023552 A (KOBE STEEL LTD), 6 février 1982 (1982-02-06)

## Description

La présente invention porte sur un conteneur de conditionnement de fil de soudage de forme intérieure conique, tronconique ou pyramidale, dans lequel la bobine de fil est maintenue par un dispositif de retenue interne mobile à l'intérieur du fût permettant d'assurer efficacement un maintien en position des spires de fil tout au long du déplacement du dispositif de retenue.

Les fils ou fils-électrodes fusibles utilisés en soudage, en particulier en soudage automatique, sont classiquement conditionnés en bobines et placés dans des conteneurs ou fûts de conditionnement de forme cylindrique ou polygonale à côtés parallèles, par exemple hexagonale ou octogonale, servant notamment à leur acheminement sur leur lieu d'utilisation.

Lors de son utilisation, c'est-à-dire pendant une opération de soudage, le fil est progressivement entraîné, au moyen d'un dispositif de dévidage de fil, et convoyé vers une torche de soudage où l'extrémité libre du fil métallique est progressivement fondue dans un arc électrique établi entre le fil et la pièce à souder, un faisceau laser ou analogue, et le métal du fil ainsi fondu est déposé sur la ou les pièces à souder de manière à former un joint de soudage, de brasage ou similaire.

Pendant le soudage, la bobine de fil se dévide progressivement au fur et à mesure de l'utilisation du fil.

Or, le fil métallique étant conditionné en bobine, il a tendance à former intempestivement des boucles et des noeuds, lors de son dévidage, lesquels posent des problèmes, tels que emmêlements, irrégularités de dévidage ou analogues.

Pour y remédier, plusieurs systèmes ont déjà été proposés, en particulier il est connu que l'utilisation d'un dispositif de retenue mobile, lequel est placé sur la bobine de manière à venir appuyer dessus pendant le dévidage du fil permet de diminuer ces formations de boucles et de noeuds.

En effet, un tel dispositif tend à maintenir les spires de la bobine à leur place durant le déroulage progressif du fil et descend par gravité dans le fût au fur et à mesure de la sortie du fil.

Ainsi, les documents EP-A-1053189, EP-A-1357059, EP-A-1057751, EP-A-1295813 et EP-A-1275595 proposent d'utiliser de tels dispositifs de retenue venant se placer sur la bobine de fil pour empêcher l'entremêlement des tours de fil lorsque le fil est extrait de la bobine. Ces dispositifs de retenue peuvent être associés à des dispositifs de guidage, fixés ou non au couvercle de fermeture du fût, pour guider le fil vers l'extérieur du fût lors de son déroulement.

De préférence, le dispositif de retenue est en contact, au moins en certains points, avec les parois internes verticales du corps. Le contact peut être réalisé directement via les bords du dispositif de retenue lorsque celui-ci est une rondelle ou un disque circulaire ou polygonal conformé pour épouser les formes internes du fût ou alors indirectement par l'intermédiaire de pattes, de doigts, d'expansions ou analogues portés par le dispositif de retenue et venant en contact avec la paroi interne du fût ou guidés par des guides portés par la paroi du fût ou aménagés dans celle-ci.

Ainsi, le document US-A-4869367 enseigne un conteneur cylindrique pour fil de soudage dans lequel les spires de la bobine sont maintenues par un couvercle venant se positionner et appuyer sur les spires. Le couvercle a une forme de couronne et le fil est dévidé par l'ouverture située au centre de la couronne. Des membres élastiques fixés sur la couronne, font saillie au-delà de sa périphérie et viennent en contact avec les parois internes du fût cylindrique de manière à guider la descente du couvercle dans le fût et à empêcher les remontées de spires le long de la paroi interne.

Toutefois, bien que de nombreuses solutions existent pour les fûts de forme cylindrique ou polygonale à parois internes verticales, aucune solution réellement efficace n'existe pour les fûts à paroi interne non verticale, en particulier de forme intérieure conique, tronconique ou pyramidale.

En effet, la forme particulière du fût, c'est-à-dire sa ou ses parois non verticales, ne permet pas d'utiliser les systèmes classiquement utilisés pour les fûts cylindriques ou polygonaux à parois verticales puisque ces systèmes ont tous une section interne constante du fait de la verticalité de la paroi interne, c'est-à-dire ne prennent pas en compte la diminution progressive de la section interne conique, tronconique ou pyramidale du fût au fur et à mesure du dévidage de la bobine de fil.

Ainsi, si l'on utilise un dispositif de retenue classique formé d'une rondelle ou d'un disque perforé en son centre pour laisser passer le fil et dimensionné pour venir au contact de la paroi interne verticale du fût conique, tronconique ou pyramidale, avant dévidage, c'est-à-dire lorsque le dispositif est situé dans la partie haute du fût contenant les spires de fil, alors on comprend aisément qu'après extraction d'un certain nombre de spires située à la partie supérieure de la bobine, le disque de retenue ne peut plus descendre dans le fût conique puisqu'il est bloqué par la paroi interne du fût qui se rétrécit progressivement du fait de sa forme particulière à paroi non verticale et ne peut dès lors plus assurer son rôle de maintien efficace des spires jusque dans la partie basse du fût, c'est-à-dire jusqu'à dévidage total ou presque du fil.

A l'inverse, si le dispositif de retenue de fil est dimensionné pour pouvoir descendre jusqu'au fond du fût, alors on comprend aisément qu'il aura un diamètre trop petit pour pouvoir maintenir les spires en début de dévidage et celles-ci passeront alors entre ce dispositif et la paroi interne du fût en engendrant des boucles, des emmêlements et des blocages du fil empêchant son bon dévidage.

Les solutions consistant à disposer des doigts rigides ou analogues, sur la rondelle ou le disque, qui viennent au contact ou à proximité immédiate des parois du fût au début du dévidage ou alors qui sont guidés par des guides spécifiques de la paroi du fût conduisent soit aux mêmes problèmes puisque les doigts s'écarteront aussi progressivement de la paroi en libérant un espace, soit ne sont pas applicables du fait de la section décroissante interne du fût (non verticalité des parois), soit engendrent une complexité excessive du conditionnement et augmente considérablement son coût de fabrication.

Le problème qui se pose alors est de proposer alors un fût de conditionnement de bobine de fil de soudage à paroi interne non-verticale, en particulier de forme interne conique, tronconique ou pyramidale, qui ne présente pas les inconvénients susmentionnés, en particulier qui soit de réalisation simple et peu onéreuse, et qui permette un bon maintien en place de la bobine de fil pendant tout son dévidage, en empêchant efficacement en particulier la formation de noeuds et l'emmêlement des spires de fil.

La solution de la présente invention est un conteneur de conditionnement de fil de soudage comprenant :
- un fût dont la paroi interne est formée d'un ou plusieurs pans obliques, ayant une partie haute et une partie basse, la partie haute ayant un diamètre interne supérieure à la partie basse, et étant apte à recevoir une bobine de fil, et
- un dispositif de retenue de fil venant se positionner dans le fût de manière à venir appuyer sur ladite bobine de fil, ledit dispositif de retenue de fil comprenant une partie centrale rigide, avec ou sans rebord, et percée d'un orifice central au travers duquel passe le fil, ladite partie centrale ayant une dimension inférieure au diamètre interne de la partie basse du fût, et ladite partie centrale portant plusieurs expansions souples et déformables faisant saillie au-delà du rebord de ladite partie centrale.

Selon le cas, le conteneur de l'invention peut comprendre l'une ou plusieurs des caractéristiques suivantes :
- le fût dont la paroi interne est formée d'un ou plusieurs pans obliques a une forme générale interne pyramidale, conique ou tronconique.
- la partie centrale portant l'orifice central a une forme de couronne ou de disque, ou une forme polygonale, de préférence la partie centrale est métallique.
- les expansions sont fixées à la partie centrale par collage et/ou les expansions sont en polymère.
- ladite partie centrale comporte au moins trois expansions, de préférence au moins quatre expansions.
- lorsque le dispositif de retenue de fil est inséré dans le fût, les expansions se déforment vers la partie haute du fût en épousant les contours internes dudit fût.
- lorsque le dispositif de retenue de fil se déplace dans le fût en direction de la partie basse dudit fût, les expansions se restent en contact permanent avec le ou les pans obliques du fût.
- une bobine de fil est insérée dans le fût entre le fond du fût et le dispositif de retenue de fil, ledit fût étant surmonté d'un couvercle, de préférence le fût est porté par une palette de transport.

Par ailleurs, l'invention concerne aussi une installation automatisée de soudage à l'arc avec fil fusible comprenant une torche de soudage à l'arc alimentée en fil fusible issu d'un conteneur de conditionnement selon l'invention.

Un conteneur de conditionnement de fil de soudage de forme intérieure conique, tronconique ou pyramidale selon la présente invention est schématisé sur les Figures annexées.

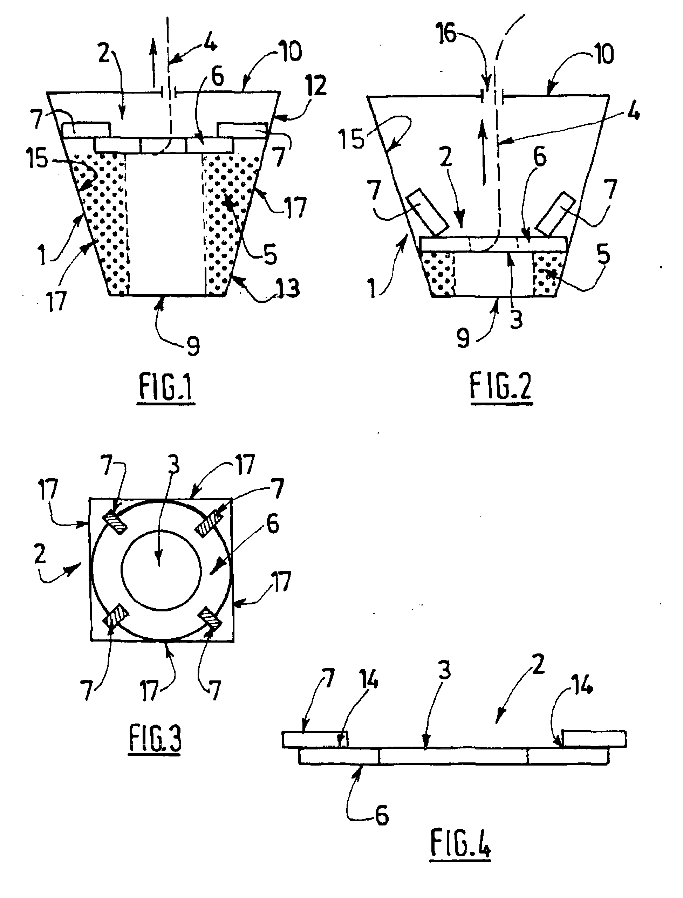

Les Figures 1 et 2 représentent un conteneur selon l'invention formé d'un fût 1 de forme intérieure ici tronconique ou pyramidale 15, dont la paroi interne est formée d'un ou plusieurs pans 17 obliques, c'est-à-dire non-verticaux, se rejoignant à la base du fût au niveau d'un fond 9 inférieur, et dimensionné pour recevoir un fil 4 de soudage pré-torsionné venant s'y lover en spires, lesquelles spires forment une couronne communément appelé bobine 5 .

Selon l'invention, le fût 1 peut revêtir différentes formes dès lors que ses parois internes sont diagonales ou obliques, c'est-à-dire non-verticales, en particulier le fût peut être conique, tronconique ou pyramidale

Un dispositif de retenue 2 de fil 4 est inséré dans le fût 1 et vient se positionner sur les spires de la bobine 5 de manière à venir appuyer, par gravité, sur les spires de fil en les maintenant en position durant le dévidage du fil 4 (sens d'extraction : voir flèches des Fig. 1 et 2), pendant son utilisation en soudage.

Le dispositif de retenue 2 est mobile axialement dans le fût 1 puisqu'il y descend progressivement au fur et à mesure de l'extraction du fil 4 et donc de la diminution de la hauteur des spires dans le fût 1, comme schématisé sur les Figures 1 et 2 qui montrent le dispositif de retenue 2 en début de dévidage, c'est-à-dire positionné vers le haut du fût 1 (Fig. 1) et subséquemment après dévidage d'environ les 2/3 de la bobine 5, c'est-à-dire positionné dans la partie basse du fût 1 (Fig. 2) à proximité du fond 9.

Le fût 1 du conditionnement a une section (ou diamètre) au niveau de sa partie haute 12, i.e. vers le couvercle 10, supérieure à sa section (ou diamètre) au niveau de sa partie basse 13, i.e. vers le fond 9.

En d'autres termes, la section pour un fût pyramidal ou le diamètre pour un fût tronconique intérieur du fût 1 diminue progressivement depuis sa partie haute 12 vers sa partie basse 13.

Le fût 1 est, en outre, surmonté d'un couvercle 10 supérieur qui peut être dissociable ou non du fût 1, de préférence le couvercle 10 comporte un orifice central 16 pour le passage du fil 4.

Le fond 9 et le couvercle 10 peuvent être formé d'une seule pièce avec le fût 1, par exemple au sein d'une même feuille épaisse de carton ou analogue, découpée et conformée aux dimensions souhaitées, ou alors de plusieurs pièces ou éléments associés les uns aux autres pour former le conteneur, par exemple des pièces en carton ou similaires.

Pour faciliter son transport, le conteneur de l'invention peut être agencé sur une palette de transport et/ou équipé de sangles ou analogues pour permettre son levage sur un lieu d'utilisation.

De façon analogue, le fût 1 peut lui même être inséré dans une boîte externe, par exemple une boîte de forme polygonale, telle qu'une boite carrée (non représentée).

Comme détaillé sur les Fig. 3 (vue de dessus de la figure 1) et 4 (vue en coupe du dispositif de retenue), la bobine 5 de fil est maintenue par un dispositif de retenue 2 de fil comprenant une partie centrale 6 rigide en forme de disque et percée d'un orifice 3 central au travers duquel passe le fil 4 et de plusieurs expansions périphériques 7 souples et déformables fixées à partie centrale 6 rigide en forme de disque.

La partie centrale 6 en disque a une dimension, par exemple un diamètre, inférieure au diamètre interne du fût 1 au niveau de sa partie basse 13, puisque le disque doit pouvoir descendre jusqu'au fond 9 du fût 1 ou à proximité immédiate du fond 9.

Les expansions périphériques 7 souples et déformables sont fixées à la partie centrale 6 en forme de disque par tout moyen de fixation approprié, par exemple par collage (en 14).

Afin d'assurer un appui efficace du dispositif de retenue 2 sur les spires, celui-ci est préférentiellement réalisé en un matériau lourd, tel un métal ou un alliage métallique, par exemple en acier ou analogue, ou alors il est lesté avec un lest présentant un poids suffisant pour obtenir le maintien souhaitée des spires de la bobine 2.

Le fait que les expansions périphériques 7 soient souples et déformables leur permet d'épouser parfaitement les contours ou pans 17 obliques de la paroi interne du fût 1, comme schématisé sur la Figure 2, en empêchant ainsi que les spires de fil 4 ne puissent passer entre le bord périphérique du disque 6 central et la paroi interne conique 15 du fût 1 et ce, tout au long de la descente du dispositif de retenue 2 à l'intérieur du fût.

Les expansions 7 dépassant au-delà du rebord périphérique du disque 6 doivent impérativement être positionnées au-dessus du disque 6, c'est-à-dire du côté de la partie haute 12 par laquelle le fil 4 est extrait, et ce, de manière à ne pas constituer des points de blocage de la progression du dispositif de retenue 2 dans le fût au fur et à mesure du dévidage du fil 4.

De même, on prendra le soin de choisir un matériau constitutif des expansions périphériques 7 qui autorise leur déformation progressive de manière à épouser le contour 15 interne des pans obliques 17 du fût 1 dont le diamètre diminue progressivement du haut 12 vers le bas 13. Par exemple, les expansions 7 peuvent être formée de lamelles de caoutchouc souple de 2 mm d'épaisseur.

Afin d'assurer un meilleur dévidage du fil 4, de façon connue en soi, un cylindre de guidage peut être inséré (non montré) au centre de la bobine 5 de fil 4 et avoir un diamètre externe inférieur au diamètre de l'orifice 3 de manière à permettre le passage dudit cylindre de guidage au travers du l'orifice 3 au fur et à mesure du dévidage de la bobine 2.

Le dispositif de retenue 2 peut être fabriqué, par exemple, à partir d'un disque 6 perforé 3 en acier, par exemple obtenu par découpe au laser d'une tôle d'acier, sur lequel on positionne et on colle 14 les expansions périphériques 7 aux endroits souhaités, par exemple quatre expansions 7 comme montré sur la figure 3 ; bien entendu, le nombre d'expansions 7 peut être supérieur ou inférieur à quatre en fonction par exemple de la taille du fût, de l'élasticité du fil, etc...

Afin d'améliorer encore le maintien des spires de fil, le dispositif de retenue de fil peut également comprendre une partie ou couronne périphérique en plastique souple déformable, par exemple une ou plusieurs feuilles de plastiques superposées ou repliées selon plusieurs épaisseurs, ayant un diamètre supérieur à celui de la partie haute du fût, solidarisé du disque 6 central perforé 3 et venant se positionner sous les expansions 7 de manière à épouser les concours internes du fût 1 et à empêcher les passages intempestifs des spires de fil entre la paroi du fût et le rebord du disque 6 ou les expansions 7.

Le conteneur de l'invention est facile à fabriquer, de coût faible, de mise en oeuvre facile et a présenté une grande efficacité lors de tests de faisabilité ayant été réalisés.

Le conteneur de conditionnement de fil de l'invention peut être utilisé pour alimenter une installation automatisée de soudage à l'arc avec fil fusible comprenant une torche de soudage à l'arc alimentée en un ou plusieurs fils fusibles, en particulier pour le soudage MIG ou MAG, ou pour le soudage hybride laser-arc avec électrode fusible, notamment robotisé .

## Revendications

1. Conteneur de conditionnement de fil de soudage comprenant :
- un fût (1) apte à recevoir une bobine (5) de fil (4), et
- un dispositif de retenue (2, 3, 6, 7) de fil venant se positionner dans le fût (1) de manière à venir appuyer sur ladite bobine (5) de fil (4), ledit dispositif de retenue (2, 3, 6, 7) de fil comprenant une partie centrale (6) rigide et percée d'un orifice (3) central au travers duquel passe le fil (4), **caractérisé en ce que** la paroi interne (15) du fût (1) est formée d'un ou plusieurs pans (17) obliques, ayant une partie haute (12) et une partie basse (13), la partie haute (12) ayant un diamètre interne supérieure à la partie basse (13), et **en ce que** ladite partie centrale (6) du dispositif de retenue a une dimension inférieure au diamètre interne de la partie basse (13) du fût (1), et ladite partie centrale (6) porte plusieurs expansions (7) souples et déformables faisant saillie au-delà du rebord de ladite partie centrale (6).

2. Conteneur selon la revendication 1, **caractérisé en ce que** le fût (1) dont la paroi interne (15) est formée d'un ou plusieurs pans (17) obliques a une forme générale interne pyramidale, conique ou tronconique.

3. Conteneur selon les revendications 1 ou 2, **caractérisé en ce que** la partie centrale (6) portant l'orifice (3) central a une forme de couronne ou de disque, ou une forme polygonale, de préférence la partie centrale (6) est métallique.

4. Conteneur selon les revendications 1 à 3, **caractérisé en ce que** les expansions (7) sont fixées à la partie centrale (6) par collage et/ou les expansions (7) sont en polymère.

5. Conteneur selon les revendications 1 à 4, **caractérisé en ce que** ladite partie centrale (6) comporte au moins trois expansions (7), de préférence au moins quatre expansions (7).

6. Conteneur selon les revendications 1 à 5, **caractérisé en ce que**, lorsque le dispositif de retenue (2, 3, 6, 7) de fil est inséré dans le fût (1), les expansions (7) se déforment vers la partie haute (12) du fût (1) en épousant les contours internes dudit fût (1).

7. Conteneur selon les revendications 1 à 6, **caractérisé en ce que**, lorsque le dispositif de retenue (2, 3, 6, 7) de fil se déplace dans le fût (1) en direction de la partie basse (13) dudit fût (1), les expansions (7) restent en contact permanent avec le ou les pans obliques (17) du fût (1).

8. Conteneur selon les revendications 1 à 7, **caractérisé en ce qu'**une bobine de fil est insérée dans le fût (1) entre le fond (9) du fût (1) et le dispositif de retenue (2, 3, 6, 7) de fil, ledit fût (1) étant surmonté d'un couvercle (10), de préférence le fût (1) est porté par une palette de transport.

9. Installation automatisée de soudage à l'arc avec fil (4) fusible comprenant une torche de soudage à l'arc alimentée en fil (4) fusible, issu d'un conteneur de conditionnement de fil,
**caractérisée en ce que** le conteneur de conditionnement est selon l'une des revendication 1 à 8.

## Claims

1. Container for packaging welding wire comprising:
- a drum (1) capable of receiving a reel (5) of wire (4); and
- a device (2, 3, 6, 7) for retaining the wire being placed in the drum (1) so as to press down on said reel (5) of wire (4), said wire-retaining device (2, 3, 6, 7) comprising a rigid central part (6) pierced by a central orifice (3) through which the wire (4) passes, **characterized in that** the inner wall (15) of the drum (1) is formed from one or more sloping sides (17), having a top part (12) and a bottom part (13), the top part (12) having an internal diameter greater than the bottom part (13), and **in that** said central part (6) of the retaining device has a dimension smaller than the internal diameter of the bottom part (13) of the drum (1), and said central part (6) has several flexible and deformable expansions (7) that jut out beyond the edge of said central part (6).

2. Container according to Claim 1, **characterized in that** the drum (1), the inner wall (15) of which is formed from one or more sloping sides (17), has a general internal pyramidal, conical or tapered shape.

3. Container according to Claims 1 or 2,
**characterized in that** the central part (6) bearing the central orifice (3) has a crown or disc shape, or a polygonal shape, preferably the central part (6) is metallic.

4. Container according to Claims 1 to 3,
**characterized in that** the expansions (7) are fastened to the central part (6) by bonding and/or the expansions (7) are made of a polymer.

5. Container according to Claims 1 to 4,
**characterized in that** said central part (6) comprises at least three expansions (7), preferably at least four expansions (7).

6. Container according to Claims 1 to 5,
**characterized in that,** when the wire-retaining device (2, 3, 6, 7) is inserted into the drum (1), the expansions (7) deform towards the top part (12) of the drum (1) by following the internal contours of said drum (1).

7. Container according to Claims 1 to 6,
**characterized in that,** when the wire-retaining device (2, 3, 6, 7) moves in the drum (1) in the direction of the bottom part (13) of said drum (1), the expansions (7) remain in permanent contact with the sloping side or sides (17) of the drum (1).

8. Container according to Claims 1 to 7,
**characterized in that** a reel of wire is inserted into the drum (1) between the base (9) of the drum (1) and the wire-retaining device (2, 3, 6, 7), said drum (1) being surmounted by a cover (10), preferably the drum (1) is borne by a transport pallet.

9. Automated installation for arc welding with consumable wire (4) comprising an arc-welding torch fed with consumable wire (4) from a wire-packaging container, **characterized in that** the packaging container is according to one of Claims 1 to 8.

## Patentansprüche

1. Behälter zur Verpackung von Schweißdraht, der Folgendes umfasst:
- eine Trommel (1), die eine Spule (5) mit Draht (4) aufnehmen kann, und
- eine Vorrichtung (2, 3, 6, 7) zum Festhalten des in der Trommel (1) positionierten Drahtes, um sich auf der Spule (5) mit Draht (4) abzustützen, wobei die Vorrichtung (2, 3, 6, 7) zum Festhalten des Drahtes einen starren mittleren Teil (6) umfasst, der mit einer mittleren Öffnung (3) versehen ist, durch die sich der Draht (4) erstreckt, **dadurch gekennzeichnet, dass** die Innenwand (15) der Trommel (1) aus einer oder mehreren schrägen Flächen (17) ausgebildet ist, mit einem oberen Teil (12) und einem unteren Teil (13), wobei der obere Teil (12) einen größeren Innendurchmesser aufweist als der untere Teil (13), und dass der mittlere Teil (6) der Festhaltevorrichtung eine Abmessung aufweist, die kleiner ist als der Innendurchmesser des unteren Teils (13) der Trommel (1), und der mittlere Teil (6) mehrere flexible und verformbare Ausdehnungen (7) aufweist, die über den Rand des mittleren Teils (6) vorragen.

2. Behälter nach Anspruch 1, **dadurch gekennzeichnet, dass** die Trommel (1), deren Innenwand (15) aus einer oder mehreren schrägen Flächen (17) gebildet ist, eine allgemein innere pyramidenförmige, konische oder kegelstumpfförmige Form aufweist.

3. Behälter nach Anspruch 1 oder 2, **dadurch gekennzeichnet, dass** der mittlere Teil (6), der die mittlere Öffnung (3) aufweist, eine Kranz- oder Scheibenform oder eine polygonale Form, aufweist, wobei der mittlere Teil (6) vorzugsweise aus Metall ist.

4. Behälter nach den Ansprüchen 1 bis 3, **dadurch gekennzeichnet, dass** die Ausdehnungen (7) durch Kleben an dem mittleren Teil (6) befestigt sind und/oder die Ausdehnungen (7) aus einem Polymer bestehen.

5. Behälter nach den Ansprüchen 1 bis 4, **dadurch gekennzeichnet, dass** der mittlere Teil (6) mindestens drei Ausdehnungen (7), vorzugsweise mindestens vier Ausdehnungen (7), aufweist.

6. Behälter nach den Ansprüchen 1 bis 5, **dadurch gekennzeichnet, dass,** wenn die Vorrichtung (2, 3, 6, 7) zum Festhalten des Drahtes in der Trommel (1) eingesetzt ist, sich die Ausdehnungen (7) zum oberen Teil (12) der Trommel (1) verformen, wobei sie sich an die inneren Konturen der Trommel (1) anpassen.

7. Behälter nach den Ansprüchen 1 bis 6, **dadurch gekennzeichnet, dass,** wenn sich die Vorrichtung (2, 3, 6, 7) zum Festhalten des Drahtes in der Trommel (1) in Richtung des unteren Teils (13) der Trommel (1) bewegt, die Ausdehnungen (7) in dauerhaftem Kontakt mit der oder den schrägen Fläche(n) (17) der Trommel (1) bleiben.

8. Behälter nach den Ansprüchen 1 bis 7, **dadurch gekennzeichnet, dass** eine Drahtspule zwischen der Basis (9) der Trommel (1) und der Vorrichtung (2, 3, 6, 7) zum Festhalten des Drahtes in der Trommel (1) eingesetzt ist, wobei die Trommel (1) von einem Deckel (10) überragt wird, wobei die Trommel (1) vorzugsweise von einer Transportpalette getragen wird.

9. Automatisierte Lichtbogenschweißanlage mit einem Schmelzdraht (4), die einen Lichtbogenschweißbrenner enthält, der mit einem Schmelzdraht (4) gespeist wird, der von einem Drahtverpackungsbehälter zugeführt wird, **dadurch gekennzeichnet, dass** der Verpackungsbehälter einem der Ansprüche 1 bis 8 entspricht.
